# EUROPÄISCHE PATENTSCHRIFT

(11) **EP 0 475 940 B1**
(45) Veröffentlichungstag und Bekanntmachung des Hinweises auf die Patenterteilung: **10.08.1994**
(21) Anmeldenummer: 90900187.7
(22) Anmeldetag: 04.01.1990
(51) Int. Cl.: B23K 20/04

(54) **VERFAHREN UND VORRICHTUNG ZUM HERSTELLEN VON ZWEI- ODER MEHRSCHICHTIGEN BÄNDERN AUS METALL DURCH KALTWALZPLATTIEREN**
PROCESS AND DEVICE FOR MANUFACTURING METAL STRIPS COMPOSED OF TWO OR MORE LAYERS BY COLD-ROLLING PLATING
PROCEDE ET DISPOSITIF DE PRODUCTION DE BANDES METALLIQUES A DEUX COUCHES OU DAVANTAGE PAR PLACAGE PAR LAMINAGE A FROID

(30) Priorität: 05.01.1989 DE 3900171
(43) Veröffentlichungstag der Anmeldung: 25.03.1992
(73) Patentinhaber: Fr. Kammerer GmbH, D-75181 Pforzheim (DE)
(72) Erfinder: KULL, Peter, D-7534 Birkenfeld 1 (DE)
(74) Vertreter: Twelmeier, Ulrich, Dipl.Phys.
(86) Internationale Anmeldenummer: EP9000011
(87) Internationale Veröffentlichungsnummer: WO9007396

(56) Entgegenhaltungen:
- AT-A- 351 905
- US-A- 4 412 439
- US-A- 4 415 377

## Beschreibung

Die Erfindung geht aus von einem Verfahren mit den im Oberbegriff des Anspruchs 1 angegebenen Merkmalen.

Bimetallbänder kann man dadurch herstellen, dass man die beiden miteinander zu verbindenden Bänder dem durch zwei Arbeitswalzen eines Walzgerüstes gebildeten Walzspalt zuführt, in welchem die beiden Bänder zusammenlaufen, verformt werden und unter Vergrößerung ihrer gereinigten, gegenseitigen Berührungsflächen kalt miteinander verschweißen. Je nach dem, ob die miteinander zu verbindenden Bänder zum Anhaften an den Arbeitswalzen neigen oder nicht, muss mit einem Trennschmiermittel gearbeitet werden oder nicht. Walzt man beispielsweise Bänder aus Gold oder Silber auf stark kupferhaltige Trägerbänder auf, dann kann man ohne ein Trennschmiermittel arbeiten, weil die miteinander zu verbindenden Bänder verhältnismässig weich sind und deshalb mit verhältnismässig geringen Walzkräften eine Kaltverschweißung erzielt werden kann. Das Kaltverschweißen von Bändern, die einen größeren Formänderungswiderstand zeigen, erfordert entsprechend höhere Walzkräfte. Will man zum Beispiel Aluminiumbänder auf Trägerbänder aus einer Legierung von Eisen mit 41 % Nickel aufwalzen, so muss man beim Trägerband einen Formänderungswiderstand überwinden, der um einen Faktor 3 bis 4 größer ist als bei der Herstellung von Kontaktbimetallbändern, die mit stark kupferhaltigen Trägerbändern hergestellt werden. Der hohe Formänderungswiderstand erfordert so hohe Walzkräfte bzw. Walzdrücke im Walzspalt, dass auf die Arbeitswalzen unbedingt ein Trennschmiermittel aufgetragen werden muss, um sicherzustellen, dass die Bänder mit den Arbeitswalzen nicht kalt verschweißen.

Es ist Stand der Technik, Trennschmiermittel mit Hilfe eines Filzes auf Walzen aufzutragen (US 4,412,439) oder aufzusprühen (US 4,415,377), und das funktioniert zufriedenstellend, solange nur ein einzelnes Band auf ein Trägerband aufgewalzt wird. Probleme hingegen treten auf, wenn mehrere Bänder zugleich mit Abstand nebeneinanderliegend auf ein Trägerband gewalzt werden sollen. Es hat sich nämlich gezeigt, dass Querströmungen des Trennschmiermittels im Walzspalt auftreten, die dazu führen, dass die Dicke des Trennschmiermittelfilms über die Breite des Walzspaltes schwankt. Eine besondere Gefahr besteht darin, dass ein Teil des Trennschmiermittels zwischen die Bänder gelangt, welche kalt miteinander verschweißen sollen, so dass die Plattierung Fehlstellen aufweist.

Der Erfindung liegt die Aufgabe zugrunde, ein Verfahren und eine Vorrichtung zum Kaltwalzplattieren von zwei- oder mehrschichtigen Bändern aus Metall anzugeben, mit denen es dann, wenn mit einem Trennschmiermittel gearbeitet werden muss, gelingt, mehrere Bänder zugleich mit Abstand nebeneinander so auf ein Trägerband zu walzen, dass die Plattierung weniger Fehlstellen aufweist als bisher.

Die Aufgabe wird gelöst durch ein Verfahren mit den im Anspruch 1 angegebenen Merkmalen sowie durch eine zum Durchführen dieses Verfahrens geschaffene Vorrichtung mit den im Anspruch 21 angegebenen Merkmalen. Vorteilhafte Weiterbildungen der Erfindung sind Gegenstand der Unteransprüche.

Erfindungsgemäß wird das Trennschmiermittel verdünnt, nämlich in Form einer Emulsion auf die Walzen aufgetragen, insbesondere aufgesprüht und ein Überschuß wird von den Walzen zugleich abgesaugt. Dadurch werden mehrere Effekte erzielt, die in Kombination zur Lösung der Aufgabe beitragen und weitere Vorteile nach sich ziehen. Dadurch, dass das Trennschmiermittel verdünnt in Form einer Emulsion aufgetragen wird, gelangt es von vornherein in geringeren Mengen auf die Walzen als bisher. Durch das gleichzeitige Absaugen der Emulsion wird ein Überschuß der Emulsion sofort entfernt. Darüberhinaus findet unter der Einwirkung des die Absaugung begleitenden Luftstroms eine teilweise Entmischung der Emulsion statt, welche zur Folge hat, dass durch die Absaugung in erwünschter Weise bevorzugt die Emulsionsgrundlage abgesaugt wird. Dieser Effekt wird dadurch begünstigt, dass als Emulsionsgrundlage eine Flüssigkeit verwendet wird, die einen höheren Dampfdruck aufweist als das Trennschmiermittel und deshalb nicht nur durch den absaugenden Luftstrom in flüssiger Phase von der Walzenoberfläche entfernt wird, sondern von den Walzen auch verdampft, wobei das Verdampfen dadurch begünstigt wird, dass sich die Walzenoberfläche durch die Absaugung in einem Bereich verminderten Luftdruckes befindet.

Es gelingt auf diese Weise, auf den Walzen einen Trennschmiermittelfilm niederzuschlagen, der dünner und gleichmässiger ist als man es bisher kannte. Durch das erfindungsgemäße Verfahren kann man so dünne und gleichmässige Trennschmiermittelfilme erzeugen, dass Querströmungen des Trennschmiermittels im Walzspalt praktisch nicht mehr auftreten. Wo keine Querströmungen mehr auftreten, kann das Trennschmiermittel aber auch nicht mehr zwischen die kalt miteinander zu verschweißenden Bänder geraten, so dass es möglich ist, eine weitgehend fehlerfreie Plattierung zu erhalten.

Der erfindungsgemäß erreichbare dünne und gleichmässige Trennschmiermittelfilm hat als weiteren Vorteil zur Folge, dass das kaltwalzplattierte Band praktisch keine Toleranzen mehr aufweist, die durch Schwankungen der Dicke des Trennschmiermittelfilms verursacht werden; die Genauigkeit des kaltwalzplattierten Bandes ist vielmehr nur noch abhängig von der Genauigkeit der Ausgangsbänder, von der Genauigkeit des Walzgerüstes und von der Genauigkeit des Rundlaufs der Walzen. Das erfindungsgemäße Verfahren erlaubt also auch die Herstellung von kaltwalzplattierten Bändern mit geringeren Maßtoleranzen als bisher.

Ein weiterer wesentlicher Vorteil der Erfindung liegt darin, dass sie eine wirksame Walzenkühlung zur Folge hat. Das liegt daran, dass das Trennschmiermittel verdünnt in Form einer Emulsion auf die Walzen aufgetragen und vor allem die Emulsiongrundlage von den Walzen wieder abgesaugt wird. Die Emulsionsgrundlage nimmt dabei Wärme von den Walzen auf und führt sie ab, zum einen unmittelbar durch das Absaugen, zum andern in Form von Verdampfungswärme durch die von der Walzenoberfläche verdampfende Emulsionsgrundlage. Die Walzenkühlung ermöglicht ihrerseits höhere Arbeitsgeschwindigkeiten und damit einer wirtschaftlichere Herstellung der Bänder. Zugleich verringert die Walzenkühlung die temperaturbedingte Durchbiegung (Bombierung) der Walzen und führt deshalb zu kaltwalzplattierten Bändern mit verbesserter Maßgenauigkeit. Eine wirksame Kühlung ist insbesondere dann von Bedeutung, wenn Bänder aus Werkstoffen gewalzt werden sollen, die einen hohen Formänderungswiderstand zeigen, wie es bei FeNi45 der Fall ist und welche deshalb mit gehärteten Walzen bearbeitet werden. Solche gehärteten Walzen beginnen nämlich ab einer Temperatur von ungefähr 200 bis 220°C sich zu entfestigen. Dem wird jedoch durch das erfindungsgemäße Verfahren wirksam begegnet. Dabei erreicht man nicht nur eine Kühlung der Walzen, sondern auch eine Stabilisierung ihrer Temperatur und eine Vergleichmässigung der Temperaturverteilung über der Walzenoberfläche.

Weil der erfindunggemäß erreichbare Trennschmiermittelfilm so dünn ist, kann sich das Trennschmiermittel im Walzspalt auch nicht mehr entmischen, so dass auch die erfindungsgemäß erreichbaren Schmierbedingungen gleichmässiger sind als beim Stand der Technik, was ebenfalls das Erreichen geringer Maßtoleranzen der walzplattierten Bänder begünstigt.

Im Ergebnis erreicht man durch das erfindungsgemäße Verfahren nicht nur, dass man mehrere Bänder mit Abstand nebeneinander in guter Qualität auf ein Trägerband mit hohem Formänderungswiderstand walzen kann; selbst wenn man nur ein einziges Band auf ein Trägerband walzen will, kann man mit dem neuen Verfahren schneller und genauer arbeiten als bisher, wodurch in vielen Fällen auch weniger Zwischenglühungen erforderlich werden, was einen enormen Preisvorteil darstellt.

Als Emulsionsgrundlage eignet sich besonders Wasser, weil es bequem handhabbar und mit den üblichen Trennschmiermitteln emulgierbar ist und weil es sich besonders gut zur Kühlung der Walzenoberfläche eignet. Die Emulsion kann darüberhinaus noch Zusätze enthalten, beispielsweise Emulgatoren, Stabilisatoren, Bakterizide, Entschäumungsmittel und den Dampfdruck herabsetzende Mittel.

Den Anteil des Trennschmiermittels an der Emulsion wählt man zweckmässigerweise so niedrig, dass man einen möglichst dünnen Trennschmiermittelfilm auf den Walzen erhält, aber nicht zu niedrig, damit man einen geschlossenen Trennschmiermittelfilm erhält. Es wird empfohlen, den Anteil des Trennschmiermittels an der Emulsion zwischen 1 Vol.-% und 30 Vol.-%, vorzugsweise zu ungefähr 10 Vol.-% zu wählen.

Vorzugsweise trägt man die Emulsion durch Sprühen auf die Walzen auf. Das hat den Vorteil, dass die Ausbildung eines dünnen, gleichmässigen Trennschmiermittelfilms begünstigt wird und dass die Walzenoberfläche in einem Arbeitsgang laufend gewaschen und mit frischem Trennschmiermittel beschichtet wird. Der Trennschmiermittelfilm auf den Walzen ist somit immer frisch. Die überschüssig aufgesprühte Emulsion wird abgesaugt und kann in einen Auffangbehälter geleitet werden. Vorzugsweise wird die Emulsion jedoch im Kreislauf geführt. Dazu führt man die abgesaugte Emulsion zweckmässigerweise über ein Schmutzfilter direkt in einen Vorratsbehälter zurück, aus welchem eine Pumpe das Trennschmiermittel ansaugt und Sprühdüsen zuführt, die gegen die Walzen gerichtet sind.

Als Trennschmiermittel eignen sich insbesondere solche, die als Hauptbestandteil ein Mineralöl enthalten. Geeignete Zusatzbestandteile sind Fettöle wie z.B. Rizinusöl, Spermöl und Rüböl sowie Emulgatoren, beispielsweise Alkylarylsulfonate aus der Gruppe der anionischen Emulgatoren oder ethoxylierte Phenole aus der Gruppe der nichtionischen Emulgatoren.

Vorzugsweise hält man die Emulsion im Vorratsbehälter auf gleichbleibender Temperatur, damit sie mit gleichbleibender Temperatur auf die Walzen aufgetragen werden kann. Das hat den Vorteil, dass die Walzentemperatur besonders geringen Schwankungen unterworfen ist.

Vorzugsweise trägt man die Emulsion nicht nur auf die beiden Arbeitswalzen, sonden auch auf die ihnen zugeordneten Stützwalzen auf. Es hat sich gezeigt, dass man auf diese Weise einen gleichmässigeren Trennschmiermittelfilm auf den Arbeitswalzen erhält, als wenn man das Trennschmiermittel nur auf die Arbeitswalzen aufträgt.

Das Auftragen und Absaugen der Emulsion auf die Arbeitswalzen erfolgt vorzugsweise in der Nähe des Walzspaltes, und zwar auf seiner Auslaufseite. Das hat den Vorteil, dass die durch den Walzvorgang verursachte Erwärmung der Walzenoberfläche möglichst frühzeitig wieder abgebaut werden kann.

Die Emulsion kann an einer Stelle der Walzenoberfläche aufgetragen und an einer davon verschiedenen, durch die Walzendrehung später erreichten Stelle wieder abgesaugt werden. Vorzugsweise sprüht man die Emulsion jedoch bereits durch den absaugenden Luftstrom hindurch auf die Walzen. Dadurch wird bereits in der Phase des Aufsprühens ein Überschuß der Emulsion abgeführt und unmittelbar nach dem Niederschlagen der Emulsion auf der Walzenoberfläche dort eine gewisse Trennung des Trennschmiermittels von der Emulsiongrundlage erreicht und somit die Entfernung der Emulsionsgrundlage von der Walzenoberfläche begünstigt, was noch dadurch unterstützt werden kann, dass man bereits das Aufsprühen der Emulsion auf die Walzenoberfläche in einer Atmosphäre mit subatmosphärischem Druck zwischen 0,6 bar und 0,8 bar durchführt. Zweckmässigerweise saugt man die Walzenoberfläche jedoch nicht nur in dem Bereich ab, in welchem sie von dem Sprühnebel getroffen wird, sondern zusätzlich in einem davon getrennten Bereich, welcher auf den Sprühbereich in Drehrichtung der Walze folgt. Einen besonders dünnen und gleichmässigen, von der Emulsionsgrundlage weitestgehend befreiten Trennschmiermittelfilm erreicht man, wenn man zwischen diesen beiden Bereichen die Walzenoberfläche zusätzlich abwischt, beispielsweise mittels einer Abstreiflippe aus Gummi.

Besonders günstig für die Entfernung des überschüssigen Trennschmiermittels und die nachfolgende Trocknung der Walzenoberfläche ist es, wenn man den Luftstrom, der die Absaugung begleitet, mit möglichst hoher Geschwindigkeit über die Walzenoberfläche hinwegstreichen läßt.

Eine zur Durchführung des erfindungsgemäßen Verfahrens geeignete und besonders entwickelte Vorrichtung ist Gegenstand des Anspruchs 22. Die Absaugeinrichtung kann die Auftrageinrichtung übergreifen oder ihr bezogen auf die Drehrichtung der Walze nachgeordnet sein. Wenn sie die Auftrageinrichtung übergreift, hat das den Vorteil, dass sie bereits während des Auftragens der das Trennschmiermittel enthaltenden Emulsion einen Überschuß der Emulsion abführen kann. Das ist insbesondere von Vorteil, wenn - wie bevorzugt - die Emulsion auf die jeweilige Walze gesprüht wird, weil dann bereits überschüssiger Sprühnebel abgesaugt werden kann. Ist die Absaugeinrichtung der Auftrageinrichtung nachgeordnet, hat das den Vorteil, dass die Emulsionsgrundlage, in welcher das Trennschmiermittel zunächst emulgiert ist, besonders gründlich entfernt werden kann. Am besten ist es, wenn man beide Arbeitsweisen miteinander kombiniert, nämlich sowohl eine die Auftrageinrichtung übergreifende als auch eine ihr nachgeordnete Absaugeinrichtung vorsieht. Für jede dieser Ausführungsformen der Erfindung eignet sich besonders eine Ausbildung der Absaugeinrichtung mit den im Anspruch 25 bzw. mit den im Anspruch 28 angegebenen Merkmalen. Die Ausbildung einer Kammer, welche die Walzenoberfläche teilweise abdeckt, hat den Vorteil, dass durch die Absaugung in dieser Kammer ein unterdruck entsteht, welcher das Verdampfen der Emulsionsgrundlage von der durch die Kammer abgedeckten Walzenoberfläche fördert. Dadurch, dass zwischen der Walzenoberfläche und der Kammerwandung enge Spalte gebildet sind, tritt die abgesaugte Luft tangential mit hoher Geschwindigkeit durch diese Spalte in die Kammer ein; die mit hoher Geschwindigkeit über die Walzenoberfläche streichende Luft ist besonders wirksam, um einen Überschuß der Emulsion und die für die Schmierung nicht benötigte Emulsionsgrundlage abzuführen.

Das Auftragen der Emulsion auf die Walze könnte im Prinzip mit einem Filz erfolgen, dem die Emulsion aus einem Vorratsbehälter zugeführt wird. Günstiger und deshalb bevorzugt ist es jedoch, zum Auftragen der Emulsion eine Sprühvorrichtung zu verwenden, welcher die Emulsion durch eine Pumpe zugeführt wird. Nachteile, die von einem allmählich verschmutzenden Filz ausgehen, werden dadurch vermieden. Ausserdem kann durch den Sprühvorgang eine feindisperse Verteilung des Trennschmiermittels begünstigt, die Walzenoberfläche gereinigt und dadurch, dass zunächst eine größere Menge der Emulsion als mit einem Filz aufgetragen wird, gekühlt werden. Die zunächst im Überschuß aufgetragene Emulsion wird durch den Absaugluftstrom fortgerissen und abgeführt. Sie wird vorzugsweise über ein Schmutzfilter in den Vorratsbehälter für die Emulsion zurückgeführt. Das Versprühen der Emulsion geschieht vorzugsweise mittels einer Anzahl von Sprühdüsen, welche längs der jeweiligen Walze angeordnet sind und die Emulsion auf mechanische Weise dadurch zerstäuben, dass ihnen die Emulsion durch eine Pumpe mit entsprechendem Druck zugeführt wird. Zum Zerstäuben der Emulsion könnte aber auch ein Verfahren der Ultraschallzerstäubung eingesetzt werden. In jedem Fall wird eine feine Zerstäubung dadurch begünstigt, dass erfindungsgemäß nicht mit unverdünntem Trennschmiermittel, sondern mit einer das Trennschmiermittel enthaltenden Emulsion gearbeitet wird, welche vorzugsweise nur ungefähr 10 % des Trennschmiermittels in Wasser als Emulsiongrundlage enthält.

Wenn die Emulsion zur Erzielung einer wesentlichen Reinigungs- und Kühlwirkung zunächst in entsprechendem Überschuß auf die Walzenoberfläche gesprüht wird, empfiehlt sich besonders eine Absaugung der Walze mit einer Anordnung aus zwei Kammern gemäß Anspruch 28, weil dann vor allem in der ersten Kammer der Überschuß abgesaugt und in der zweiten Kammer die Walzenoberfläche - unbeeinflußt vom Sprühvorgang - getrocknet werden kann. Dabei ist es besonders günstig, zwischen der ersten und der zweiten Kammer einen sich längs der Walze erstreckenden Wischer vorzusehen, welcher im Zusammenwirken mit der Absaugung in der ersten Kammer sicherstellen kann, dass die in die zweite Kammer einlaufende Walzenoberfläche nur noch so wenig Trennschmiermittel aufweist, wie es für einen fehlerfreien Kaltwalzvorgang erforderlich ist. Hinzu kommt, als weiterer Vorteil, dass der Wischer die Dicke des Films, den die Emulsion auf der Walzenoberfläche bildet, vergleichmässigt. In der zweiten Kammer findet dann nur noch eine Trocknung der Walzenoberfläche statt, d.h. es wird der Emulsion die Emulsionsgrundlage entzogen, so dass auf der Walzenoberfläche schließlich ein sehr feiner und gleichmässiger Film des Trennschmiermittels verbleibt.

Zum Abwischen der Walzenoberfläche verwendet man zweckmässigerweise eine auswechselbare Lippe aus Gummi oder aus einem Gummiersatzstoff.

Die erfindungsgemäße Vorrichtung wird dann besonders kompakt und einfach im Aufbau, wenn man die beiden Kammern in Drehrichtung der Walze einander unmittelbar benachbart anordnet. Das macht es in vorteilhafter Weiterbildung der Erfindung möglich, den Wischer selbst als das Element zu verwenden, welches die beiden Kammern voneinander trennt,und ferner die beiden Kammern mit einer gemeinsamen Absaugöffnung zu versehen.

Besonders geeignete Spaltbreiten zwischen den Kammerwänden und der Walzenoberfläche sind in den Ansprüchen 34 bis 36 angegeben. Vorzugsweise sind die Spalte im Bereich der zweiten Kammer schmaler als im Bereich der ersten Kammer; der Vorteil dieser Maßnahme liegt darin, dass der Luftdurchsatz durch die erste Kammer größer ist als durch die zweite Kammer, was das Abführen des Emulsionüberschusses begünstigt, und dass in der zweiten Kammer eine stärkere Druckabsenkung stattfindet, was die Trocknung der Walzenoberfläche begünstigt. Ferner empfiehlt es sich, den für das Abführen des Überschusses der Emulsion erforderlichen Luftdurchsatz besonders dadurch zu bewirken, dass man durch die sich in Umfangsrichtung der Walze erstreckenden Spalte, also parallel zur Drehachse der Walze, bezogen auf die Spaltlänge relativ mehr Luft einströmen läßt als durch die achsparallelen Spalte. Aus diesem Grund sind die sich in Umfangsrichtung der Walze erstreckenden Spalte insbesondere im Bereich der ersten Kammer vorzugsweise durch achsparallele Rillen vertieft.

Um durch das Aufsprühen der Emulsion eine gute Reinigungs- und Kühlwirkung zu erzielen, empfiehlt es sich, die Förderleistung der Pumpe für die Emulsion so zu bemessen, dass von der Emulsion wenigstens 0,5 l/min pro cm Kammerlänge auf die jeweilige Walze gesprüht werden können.

Die Erfindung bewährt sich besonders bei einem Walzgerüst, welches verchromte Arbeitswalzen hat. Arbeitswalzen mit einer Hartchromschicht sind an sich bekannt. Sie haben eine längere Lebensdauer als nicht verchromte Arbeitswalzen. Ihre Verwendung ist insbesondere dann angezeigt, wenn Bänder aus Nickel oder mit hohem Nickelgehalt plattiert werden sollen. Die Hartchromschicht einer Arbeitswalze weist eine Mikroporosität auf, die sich günstig auf die Bindung des Trennschmiermittelfilms auf der Walzenoberfläche auswirkt.

Der große Fortschritt, den die Erfindung gebracht hat, zeigt sich darin, dass es mit einer erfindungsgemäßen Vorrichtung gelungen ist, auf Trägerbänder aus FeNi42 sechs Bänder aus AlSi1 mit Abstand nebeneinander gleichzeitig fehlerfrei kalt aufzuwalzen. Für solche Bänder besteht ein Bedarf in der Herstellung von Leadframes, welcher bisher nicht befriedigt werden konnte.

Ein bevorzugtes Ausführungsbeispiel einer erfindungsgemäß arbeitenden Vorrichtung ist schematisch in den beigefügten Zeichnungen dargestellt.
- Figur 1: zeigt die Vorrichtung in einer Blockdarstellung,
- Figur 2: zeigt im Querschnitt ein Walzgerüst aus zwei Arbeitswalzen und zwei Stützwalzen mit an ihnen angeordneten Einrichtungen zum Erzeugen eines Trennschmiermittelfilms auf ihrer Oberfläche,
- Figur 3: zeigt eine Ansicht einer der in Fig. 2 dargestellten Einrichtungen zum Erzeugen eines Trennschmiermittelfilms, und zwar mit Blick auf die offene Seite der Einrichtung, welche im Betrieb der Walzenoberfläche zugekehrt ist,
- Figur 4: zeigt den Längsschnitt IV-IV durch die in Fig. 3 dargestellte Einrichtung,
- Figur 5: zeigt den Querschnitt V-V durch die in Fig. 3 dargestellte Einrichtung,
- Figur 6: zeigt den Querschnitt VI-VI durch die in Fig. 3 dargestellte Einrichtung,
- Figur 7: zeigt die Einrichtung aus Fig. 3 in einem Längsschnitt zusammen mit ihren Halterungen, mit denen sie im Walzgerüst montiert ist, und
- Figur 8: zeigt den Querschnitt VIII-VIII durch die in Fig. 7 dargestellte Halterung.

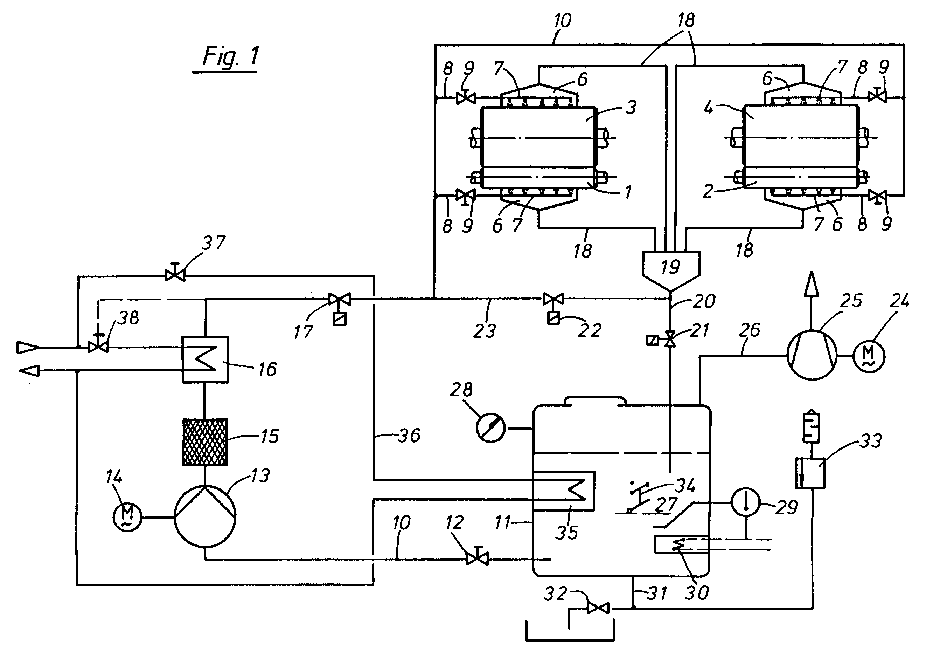

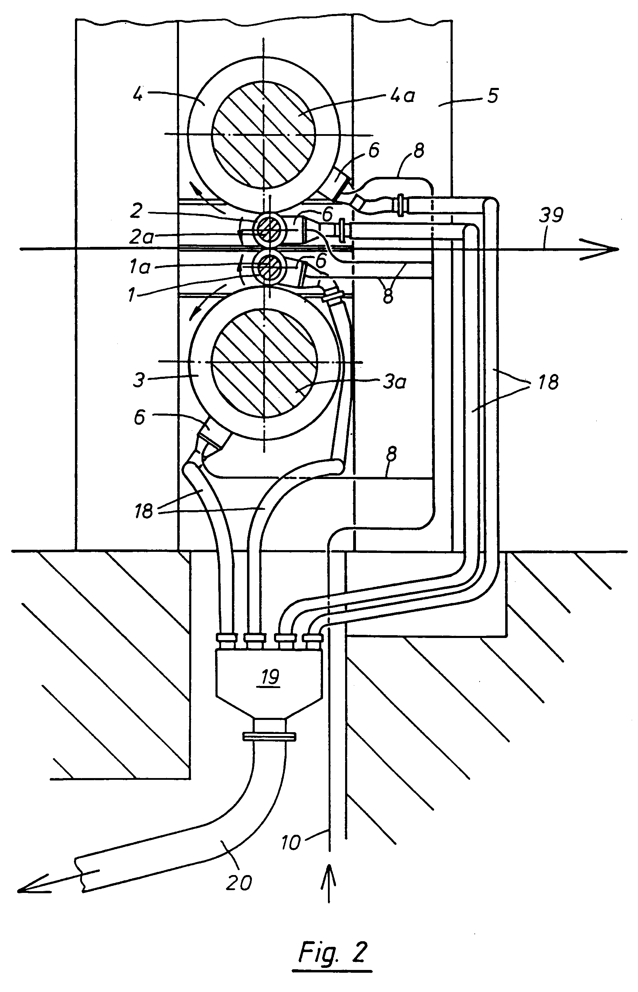

Zum Kaltwalzplattieren von Bändern aus Metall dient ein Walzgerüst mit zwei Arbeitswalzen 1 und 2, die jeweils durch eine Stützwalze 3 bzw. 4 gestützt sind und - wie Fig. 2 zeigt - mit ihren Walzenrollenzapfen 1a, 2a, 3a und 4a übereinander in einem Ständer 5 gelagert sind. Jeder Walze ist eine Einrichtung 6 zum Erzeugen eines Trennschmiermittelfilms auf der Walzenoberfläche zugeordnet, wobei jede dieser Einrichtungen 6 eine Sprühvorrichtung 7 enthält, mit welcher eine Emulsion, die das Trennschmiermittel enthält, auf die jeweilige Walze 1 bis 4 gesprüht wird. Um das Zuführen und Abführen der Emulsion zu und von den Einrichtungen 6 übersichtlicher darstellen zu können, sind in Figur 1 die Walzen in zwei getrennten Gruppen dargestellt worden.

Die Sprühvorrichtungen 7 sind über einzelne Speiseleitungen 8, in welcher jeweils ein Feinregulierventil 9 liegt, mit einer gemeinsamen Speiseleitung 10 verbunden, welche von einem Vorratsbehälter 11 ausgeht, in welchem sich ein Vorrat der Emulsion befindet. In der gemeinsamen Speiseleitung 10 liegen hintereinander ein von Hand betätigtes Absperrventil 12, eine Pumpe 13, welche durch einen Elektromotor 14 angetrieben wird, ein Filter 15, ein Kühler 16 und ein steuerbares Absperrventil 17.

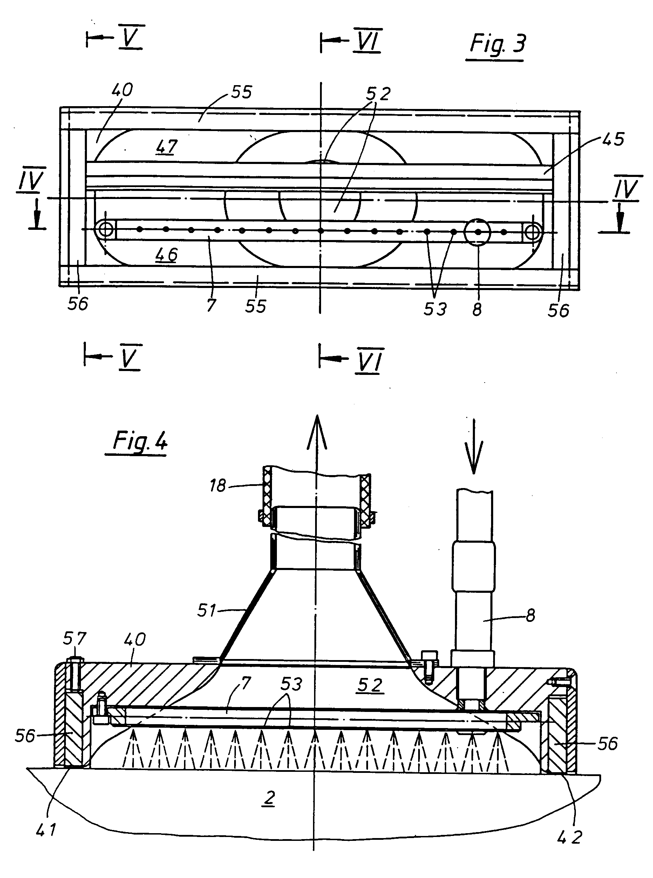

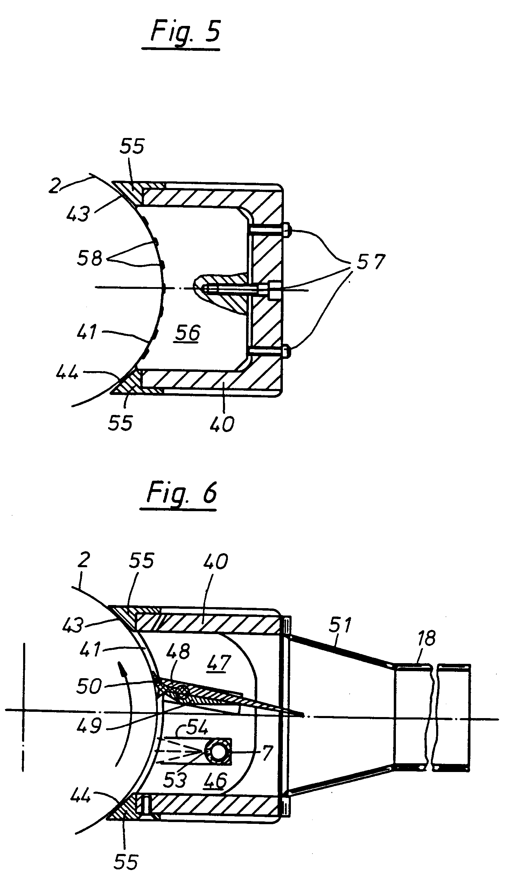

Wie anhand der Figuren 3 bis 6 noch erläutert wird, befindet sich die Sprühvorrichtung 7 jeweils in einer Kammer, welche abgesaugt werden kann. Zu diesem Zweck ist jede der Kammern durch eine eigene Absaugleitung 18 mit einem Sammelbehälter 19 verbunden, von dessen Boden eine gemeinsame Absaugleitung 20, in welcher ein steuerbares Absperrventil 21 liegt, zum Vorratsbehälter 11 führt. Ein weiteres steuerbares Absperrventil 22 liegt in einer Verbindungsleitung 23 von der gemeinsamen Absaugleitung 20 zur gemeinsamen Speiseleitung 10.

Ferner ist ein durch einen Elektromotor 24 angetriebenes Gebläse 25 vorgesehen, dessen Saugseite durch eine Leitung 26 mit dem Luftraum oberhalb des Flüssigkeitsspiegels 27 im Vorratsbehälter 11 verbunden ist. Zum Anzeigen des Drucks im Luftraum des Vorratsbehälters 11 dient ein Manometer 28 und zur Überwachung der Temperatur der Emulsion im Vorratsbehälter 11 dient ein Thermometer 29, welches Teil eines Temperaturregelkreises mit einem Heizstab 30 ist, welcher im unteren Bereich des Vorratsbehälters 11 angeordnet ist.

Am Boden des Vorratsbehälters 11 befindet sich ferner eine Ablaufleitung 31 mit einem Absperrventil 32, welches eine Entleerung des Vorratsbehälters erlaubt. An die Ablaufleitung 31 ist ferner ein Ventil 33 zum Belüften des Vorratsbehälters 11 angeschlossen.

Zur Überwachung des Füllstandes im Vorratsbehälter 11 dient ein Niveauschalter 34, welcher bei Unterschreiten eines vorgegebenen minimalen Füllstandes und beim Überschreiten eines vorgegebenen maximalen Füllstandes anspricht.

Zum Kühlen der Emulsion und zum Kondensieren von abgesaugten und zurückgeführten dampfförmigen Bestandteilen der Emulsion ist im Vorratsbehälter 11 ein Kühler 35 vorgesehen, bei dem es sich um eine von kaltem Wasser durchflossene Rohrschlange oder einen Plattenkühler handeln kann. Der Kühler 35 ist mit dem Kühler 16 in einem gemeinsamen Kühlkreislauf 36 verbunden, in welchem zwei Absperrventile 37 und 38 vorgesehen sind, die es ermöglichen, die beiden Kühler 16 und 35 unabhängig voneinander zu betreiben.

Die in Fig. 1 dargestellte Vorrichtung arbeitet wie folgt:
Die Pumpe 13 wird synchron mit den Walzen 1 bis 4 angetrieben. Bei angetriebenen Walzen und offenen Absperrventilen 12 und 17 wird deshalb aus dem Vorratsbehälter 11 Emulsion zu den Sprühvorrichtungen 7 gepumpt, auf die Walzen 1 bis 4 gesprüht und durch die Einwirkung des Gebläses 25 durch die Absaugleitungen 18 und 20 bei geöffnetem Absperrventil 21 wieder abgesaugt und in den Vorratsbehälter zurückgeführt. Zurückgeführter Dampf wird durch den Kühler 35 kondensiert. Wenn durch die Kühlung die Temperatur der Emulsion unter einen vorgegebenen Wert, vorzugsweise 20°C, absinkt, wird der Heizstab 30 eingeschaltet und die Emulsion bis zum Erreichen der vorgegebenen Solltemperatur beheizt. In den Vorratsbehälter zurückgeführte Schmutzpartikel werden sich teilweise am Boden des Vorratsbehälters 11 absetzen und können von Zeit zu Zeit nach Entleeren und Spülen des Behälters entfernt werden. Zum Teil werden die Schmutzteilchen in die Hauptspeiseleitung 10 gelangen und werden dann vom Filter 15 zurückgehalten, der in regelmässigen Abständen zu reinigen ist.

Um eine effektive Walzenkühlung zu erreichen, wird die von der Pumpe 13 zu den Sprühvorrichtungen 7 geförderte Emulsion durch den Kühler 16 zusätzlich gekühlt. Unter der Voraussetzung gleichbleibender Kühlleistung und auf konstanten Wert geregelter Temperatur im Vorratsbehälter 11 werden die Walzen 1 bis 4 mit einer Emulsion mit gleichbleibender Temperatur besprüht, so dass eine gleichförmige Walzentemperatur erreichbar ist, wobei durch die Synchronisation der Pumpe 13 mit den Walzenantrieben die Walzenschmierung und Walzenkühlung automatisch an unterschiedliche Arbeitsgeschwindigkeiten angepaßt wird.

Das Absperrventil 22 ist im Normalfall geschlossen, es wird nur für Spülvorgänge benötigt.

Mit den Feinregulierventilen 9 ist eine individuelle Feineinstellung der auf die jeweilige Walze aufgesprühten Menge der Emulsion möglich.

Spricht der Niveauschalter 34 auf den unteren Grenzwert an, wird die Vorrichtung insgesamt stillgesetzt und/oder automatisch oder von Hand frische Emulsion nachgefüllt. Spricht der Niveauschalter 34 auf den oberen Grenzwert an, wird die Vorrichtung ebenfalls stillgesetzt und/oder eine Teilmenge der Emulsion von Hand oder automatisch abgelassen.

Figur 2 zeigt im einzelnen den Aufbau des Walzgerüstes mit den beiden kleinen Arbeitswalzen 1 und 2 und den beiden größeren Stützwalzen 3 und 4, deren Drehsinn durch Pfeile angegeben ist. Die Walzrichtung ist durch den Pfeil 39 angegeben. Die Einrichtungen 6 für das Erzeugen des Trennschmiermittelfilmes befinden sich an den Arbeitswalzen 1 und 2 auf der Auslaufseite des Walzspaltes; bei den Stützwalzen 3 und 4 befinden sich die Einrichtungen 6 in unterschiedlichen Positionen.

Die Figuren 3 bis 6 zeigen den Aufbau der Einrichtung 6 am Beispiel der Arbeitswalze 2. Die Einrichtung 6 hat ein kastenförmiges, sich längs der Walze 2 erstreckendes Gehäuse 40, welches auf der der Walze zugekehrten Seite offen und der Walzenkontur so eng angepaßt und der Walzenoberfläche so dicht angenähert ist, dass zwischen der Walzenoberfläche und den Seitenwänden des Gehäuses 40 nur enge Spalte 41 bis 44 verbleiben. Durch einen längsverlaufenden Wischer 45 ist das Gehäuse in zwei Kammern 46 und 47 unterteilt. Der Wischer 45 besteht aus zwei Klemmleisten 48 und 49 und einer zwischen ihnen festgeklemmten Gummilippe 50, welche auf der Oberfläche der Walze 2 aufliegt. An der der Walze 2 gegenüberliegenden Wand des Gehäuses 40 ist ein Stutzen 51 angebracht, an welchem die Absaugleitung 18 befestigt ist. Die Einmündung des Stutzens 51 in das Gehäuse 40 bildet eine beiden Kammern 46 und 47 gemeinsame Absaugöffnung 52.

Bezogen auf den vorgegebenen Drehsinn der Walze 42 durchwandern deren Oberflächenbereiche zuerst die Kammer 46 (erste Kammer) und sodann die Kammer 47 (zweite Kammer). In der ersten Kammer 46 befindet sich die Sprühvorrichtung 7; es handelt sich dabei um ein parallel zur Walzenachse verlaufendes Rohr mit einer Folge von Düsenöffnungen 53, welche gegen die Walzenoberfläche gerichtet sind. Um die Sprühstrahlen gegenüber dem Absaugluftstrom etwas abzuschirmen, befindet sich die Sprühvorrichtung 7 in einer im Querschnitt U-förmigen Hohlprofilleiste 54, deren Öffnung gegen die Walzenoberfläche gerichtet ist.

An den Rändern der Längswände des Gehäuses sind gehärtete Metalleisten 55 vorgesehen, welche nach Bedarf, z.B. bei Verschleiß, ausgewechselt werden können. Die quer zur Walzenachse verlaufenden Endwände haben verstellbare Einsätze 56, deren Abstand von der Walzenoberfläche durch Justierschrauben 57 einstellbar ist. Die auf diese Weise justierbare Breite der Spalte 41 und 42 ist stellenweise durch Rillen 58 in den feststellbaren Einsätzen 56 vertieft.

Die durch die Sprüheinrichtung 7 auf die Walzenoberfläche gesprühte Emulsion kühlt, reinigt und schmiert die Walzenoberfläche. Der größte Teil der Emulsion wird aus der ersten Kammer 46 abgesaugt und ein verbleibender Überschuß wird durch die Gummilippe 50 abgewischt und vergleichmässigt. Der danach noch verbleibende Film auf der Walzenoberfläche wird in der Kammer 47 schließlich getrocknet.

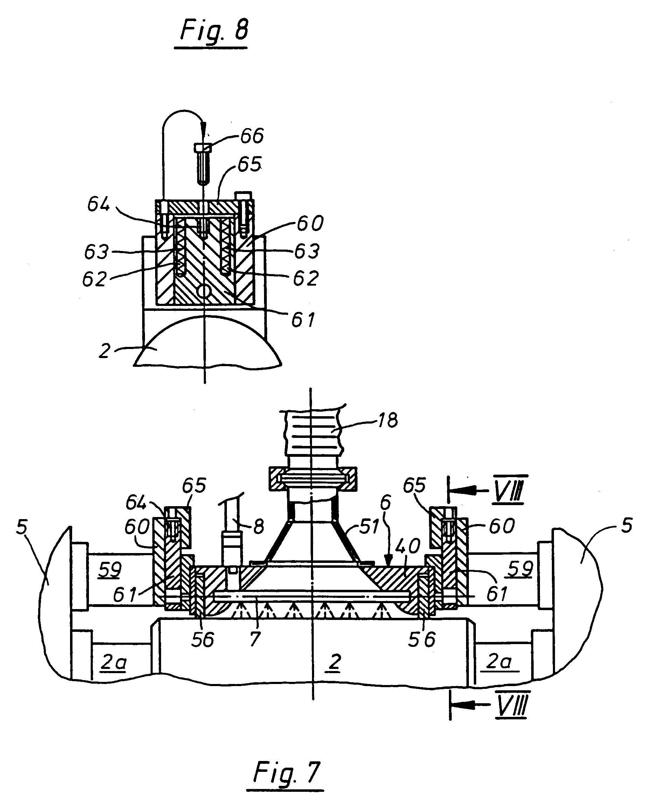

Wie die Figuren 7 und 8 zeigen, dienen zum Befestigen der Einrichtungen 6 am Ständer 5 des Walzgerüstes Paare von Halterungen 59, welche einerseits am Ständer 5 befestigt sind und andererseits mit der Einrichtung 6 verbunden sind. Dazu hat jede Halterung 59 einen Montageflansch 60, an welchem die Einrichtung 6 mittels eines Eingriffsteiles 61 angebracht ist. Das Eingriffsteil 61 hat Sackbohrungen 62, in denen Druckfedern 63 angeordnet sind, welche sich am Montageflansch 60 abstützen. Zwischen den Sacklöchern 62 ist im Eingriffsteil 61 eine Gewindebohrung 64 vorgesehen, in welche durch ein Jochteil 65 des Montageflansches 60 hindurch eine Stellschraube 66 eingedreht ist, welche sich mit ihrem Kopf auf dem Jochteil 65 abstützt. Durch tieferes Hineindrehen der Stellschraube 66 in die Gewindebohrung 64 läßt sich das Eingriffsteil 61 und damit die Einrichtung 6 gegen den Widerstand der Druckfedern 63 von der Walzenoberfläche entfernen.

## Patentansprüche

1. Verfahren zum Herstellen von zwei- oder mehrschichtigen Bändern aus Metall durch Kaltwalzplattieren, indem die miteinander zu verbindenden Bänder dem durch ein Paar von Arbeitswalzen (1,2) gebildeten Walzspalt zugeführt werden und auf die Arbeitswalzen (1,2) während dessen ein Trennschmiermittel aufgetragen wird, **dadurch gekennzeichnet,** dass eine das Trennschmiermittel und eine Emulsionsgrundlage, welche einen höheren Dampfdruck als das Trennschmiermittel hat und selbst kein Trenn- oder Schmiermittel für das Kaltwalzplattieren ist, enthaltende Emulsion auf die Walzen (1,2) aufgetragen wird und dass die Walzen (1,2) zugleich abgesaugt werden.

2. Verfahren nach Anspruch 1, **dadurch gekennzeichnet,** dass die Emulsionsgrundlage Wasser ist.

3. Verfahren nach Anspruch 1 oder 2, **dadurch gekennzeichnet,** dass die Emulsion ein Entschäumungsmittel enthält.

4. Verfahren nach einem der vorstehenden Ansprüche, **dadurch gekennzeichnet,** dass der Anteil des Trennschmiermittels an der Emulsion zwischen 1 Vol.-% und 30 Vol.-%, vorzugsweise 10 Vol.-% beträgt.

5. Verfahren nach einem der vorstehenden Ansprüche, **dadurch gekennzeichnet,** dass die Emulsion auf die Walzen (1,2) gesprüht wird.

6. Verfahren nach einem der vorstehenden Merkmale, **dadurch gekennzeichnet,** dass das Trennschmiermittel Mineralöl enthält.

7. Verfahren nach Anspruch 6, **dadurch gekennzeichnet**, dass das Trennschmiermittel ein oder mehrere Fettöle enthält.

8. Verfahren nach Anspruch 6 oder 7, **dadurch gekennzeichnet**, dass das Trennschmiermittel eine organische Schwefelverbindung enthält.

9. Verfahren nach einem der vorstehenden Ansprüche, **dadurch gekennzeichnet,** dass der abgesaugte Anteil der Emulsion im Kreislauf zurückgeführt wird.

10. Verfahren nach einem der vorstehenden Ansprüche, **dadurch gekennzeichnet,** dass die Emulsion auf gleichbleibender Temperatur gehalten wird.

11. Verfahren nach einem der vorstehenden Ansprüche in Verbindung mit einem Walzgerüst, welches ein Paar Arbeitswalzen (1,2) und wenigstens ein Paar Stützwalzen (3,4) zum Stützen der Arbeitswalzen (1,2) hat, **dadurch gekennzeichnet,** dass die Emulsion nicht nur auf die beiden Arbeitswalzen, (1,2) sondern auch auf die beiden Stützwalzen (3,4) des Walzgerüstes gesprüht wird.

12. Verfahren nach Anspruch 11, **dadurch gekennzeichnet,** dass die Emulsion in der Nähe des durch die Arbeitswalzen (1,2) gebildeten Walzspaltes, und zwar auf seiner Auslaufseite, auf die Arbeitswalzen (1,2) gesprüht wird.

13. Verfahren nach einem der vorstehenden Ansprüche, **dadurch gekennzeichnet,** dass die Emulsion auf die Walzen (1,2,3,4) in einer Atmosphäre aufgesprüht wird, in welcher ein subatmosphärischer Druck vorliegt.

14. Verfahren nach Anspruch 13, **dadurch gekennzeichnet,** dass der subatmosphärische Druck zwischen 0,6 bar und 0,8 bar, vorzugsweise bei 0,7 bar liegt.

15. Verfahren nach Anspruch 13 oder 14, **dadurch gekennzeichnet,** dass die Emulsion durch den absaugenden Luftstrom hindurch auf die Walzen (1,2,3,4) aufgesprüht wird.

16. Verfahren nach einem der vorstehenden Ansprüche, **dadurch gekennzeichnet** dass die Emulsion in einem ersten Bereich auf die Walzen (1,2,3,4) aufgesprüht und in einem davon getrennten zweiten Bereich, welcher in Drehrichtung der betreffenden Walze (1,2,3,4) auf den ersten Bereich folgt, abgesaugt wird.

17. Verfahren nach Anspruch 16, **dadurch gekennzeichnet,** dass die Walzenoberfläche zwischen dem ersten und zweiten Bereich abgewischt wird.

18. Verfahren nach Anspruch 16 oder 17, **dadurch gekennzeichnet,** dass die Walzen (1,2,3,4) nach dem Aufsprühen der Emulsion im Luftstrom getrocknet werden.

19. Verfahren nach Anspruch 16, 17 oder 18, **dadurch gekennzeichnet,** dass der trocknende Luftstrom mit hoher Geschwindigkeit über die Walzenoberfläche hinwegstreicht, wobei die Geschwindigkeit 1/3 der Schallgeschwindigkeit in Luft erreicht.

20. Verfahren nach einem der vorstehenden Ansprüche, **dadurch gekennzeichnet,** dass das aufgetragene Trennschmiermittel von den Walzen (1,2,3,4) laufend wieder abgewaschen wird.

21. Verfahren nach Anspruch 20, **dadurch gekennzeichnet,** dass das Trennschmiermittel durch das Aufsprühen der Emulsion abgewaschen wird.

22. Vorrichtung zum Erzeugen eines Films eines Trennschmiermittels auf einer Walze (1,2,3,4) eines Walzgerüstes für die Herstellung von zwei- oder mehrschichtigen Bändern aus Metall durch Kaltwalzplattieren,
mit einem das Trennschmiermittel in einer Emulsion enthaltenden Vorratsbehälter (11),
mit einer sich längs der Walze (1,2,3,4) erstreckenden und gegen die Walze (1,2,3,4) gerichteten Einrichtung (7) zum Auftragen des Trennschmiermittels,
und mit einer Einrichtung zum Zuführen des Trennschmiermittels vom Vorratsbehälter (11) zur Auftrageinrichtung (7),
**gekennzeichnet durch** eine sich längs der Walze (1,2,3,4) erstreckende und unmittelbar neben ihr angeordnete Absaugeinrichtung (40,25).

23. Vorrichtung nach Anspruch 22, **dadurch gekennzeichnet,** dass die Absaugeinrichtung (40, 25) die Auftrageinrichtung (7) übergreift.

24. Vorrichtung nach Anspruch 22, **dadurch gekennzeichnet,** dass die Absaugeinrichtung (40, 25) bezogen auf die Drehrichtung der Walze (1,2,3,4) zwischen der Auftrageinrichtung (7) und dem Walzspalt angeordnet ist.

25. Vorrichtung nach Anspruch 23 oder 24, **dadurch gekennzeichnet,** dass die Absaugeinrichtung (40, 25) durch eine sich längs der Walze (1,2,3,4) erstreckende Kammer (46, 47) gebildet ist, welche zur Walzenoberfläche hin offen und so dicht an der Walze (1,2,3,4) angeordnet ist, dass sie von der Walzenoberfläche unter Bildung von Spalten (41,42,43,44) überdeckt ist, und in welche wenigstens eine Absaugöffnung (52) mündet, welche mit der Saugseite eines Saugaggregats (25) verbunden ist.

26. Vorrichtung nach Anspruch 23 und 25, **dadurch gekennzeichnet,** dass die Auftrageinrichtung (7) eine Sprühvorrichtung ist, welcher eine das Trennschmiermittel enthaltende Emulsion durch eine Pumpe (13) zugeführt wird.

27. Vorrichtung nach Anspruch 26, **dadurch gekennzeichnet,** dass die Sprühvorrichtung (7) eine Anzahl Düsenöffnungen (53) aufweist, welche längs der Walze (1,2,3,4) angeordnet und gegen ihre Oberfläche gerichtet sind.

28. Vorrichtung nach Anspruch 25, 26 oder 27, **dadurch gekennzeichnet,** dass neben der die Auftrageinrichtung (7) übergreifenden (nachfolgend als "erste" Kammer bezeichneten) Kammer (46) eine sich längs der Walze (1,2,3,4) erstreckende und der ersten Kammer (46) in Drehrichtung der Walze (1,2,3,4) nachgeordnete zweite Kammer (47) vorgesehen ist, welche ebenfalls zur Walzenoberfläche hin offen und so dicht an der Walze (1,2,3,4) angeordnet ist, dass sie von der Walzenoberfläche unter Bildung von Spalten (41,42,43,44) überdeckt ist und in welche ebenfalls wenigstens eine Absaugöffnung (52) mündet, welche mit der Saugseite eines Saugaggregats (25) verbunden ist.

29. Vorrichtung nach Anspruch 28, **dadurch gekennzeichnet,** dass - bezogen auf die Drehrichtung der Walze (1,2,3,4) - an der Auslaufseite der ersten Kammer (46) ein sich längs der Walze (1,2,3,4) erstreckender, der Walzenoberfläche anliegender Wischer (45) angeordnet ist.

30. Vorrichtung nach Anspruch 29, **dadurch gekennzeichnet,** dass der Wischer (45) eine gummielastische Lippe (50) ist oder hat.

31. Vorrichtung nach einem der Ansprüche 28 bis 30, **dadurch gekennzeichnet,** dass die beiden Kammern (46, 47) in Drehrichtung der Walze (1,2,3,4) einander unmittelbar benachbart sind.

32. Vorrichtung nach Anspruch 29 und 31 oder 30 und 31, **dadurch gekennzeichnet,** dass der Wischer (45) die beiden Kammern (46, 47) trennt.

33. Vorrichtung nach einem der Ansprüche 28 bis 32, **dadurch gekennzeichnet**, dass die beiden Kammern (46, 47) eine gemeinsame Absaugöffnung (52) haben.

34. Vorrichtung nach Anspruch 25 oder 28, **dadurch gekennzeichnet,** dass die Spalte (41,42,43,44) schmaler als 1 mm, vorzugsweise schmaler als 0,5 mm sind.

35. Vorrichtung nach Anspruch 25 und 34, **dadurch gekennzeichnet,** dass der einlaufseitige Spalt (44) der ersten Kammer (46) 0,3 mm bis 0,4 mm breit ist.

36. Vorrichtung nach Anspruch 28 und 34, **dadurch gekennzeichnet,** dass der auslaufseitige Spalt (43) der zweiten Kammer (47) 0,1 mm bis 0,2 mm breit ist.

37. Vorrichtung nach Anspruch 25 und 27 oder 27 und 28, **dadurch gekennzeichnet,** dass die sich in Umfangsrichtung der Walze (1,2,3,4) erstreckenden Spalte (41,42) insbesondere im Bereich der ersten Kammer (46) durch ungefähr in Längsrichtung der Walze (1,2,3,4) verlaufende Rillen (58) in der jeweiligen Endwand (56) der Kammer (46, 47) vertieft sind.

38. Vorrichtung nach Anspruch 26, **dadurch gekennzeichnet**, dass die Pumpe (13) eine Förderleistung von wenigstens 0,5 l/min pro cm Kammerlänge hat.

39. Vorrichtung nach einem der Ansprüche 22 bis 38, **dadurch gekennzeichnet,** dass das Walzgerüst hartverchromte Arbeitswalzen (1,2) hat.

40. Die Anwendung des Verfahrens nach einem der Ansprüche 1 bis 21 zum Walzen von mehreren mit Abstand nebeneinander liegenden Metallbändern auf ein Trägerband.

41. Verfahren nach Anspruch 40, **dadurch gekennzeichnet,** dass Aluminiumbänder auf ein Trägerband aus Eisen-Nickel, insbesondere aus FeNi42, gewalzt werden.

## Claims

1. A process of manufacturing two- or multilayer strips of metal by cold roll-cladding in that the strips to be joined are fed to a nip that is defined by a pair of work rolls (1, 2) and a release lubricant is applied to the work rolls (1, 2) at the same time, characterized in that an emulsion which contains the release lubricant and a dispersion medium, which has a higher vapor pressure than the release lubricant and which in itself is no release agent or lubricant for the cold roll-cladding, is applied to the rolls (1, 2) and the rolls (1, 2) are subjected to suction at the same time.

2. A process according to claim 1, characterized in that the dispersion medium is water.

3. A process according to claim 1 or 2, characterized in that the emulsion contains a defoaming agent.

4. A process according to any of the preceding claims, characterized in that the content of the release lubricant in the emulsion is between 1% and 30% by volume, preferably 10% by volumes.

5. A process according to any of the preceding claims, characterized in that the emulsion is sprayed on the rolls (1, 2).

6. A process according to any of the preceding features, characterized in that the release lubricant contains mineral oil.

7. A process according to claim 6, characterized in that the release lubricant contains one or more fatty oils.

8. A process according to claim 6 or 7, characterized in that the release lubricant contains an organic sulfur compound.

9. A process according to any of the preceding claims, characterized in that the sucked-off part of the emulsion is recirculated.

10. A process according to any of the preceding claims, characterized in that the emulsion is maintained at a constant temperature.

11. A process according to any of the preceding claims in combination with a roll stand that comprises a pair of work rolls (1, 2) and at least one pair of back-up rolls (3, 4) for backing up the work rolls, characterized in that the emulsion is sprayed not only onto the two work rolls (1, 2) but also onto the two back-up rolls (3, 4) of the roll stand.

12. A process according to claim 11, characterized in that the emulsion is sprayed onto the work rolls (1, 2) on the outgoing side of and close to the nip defined by the work rolls (1, 2).

13. A process according to any of the preceding claims, characterized in that the emulsion is sprayed onto the rolls (1, 2, 3, 4) in an atmosphere which is under a subatmospheric pressure.

14. A process according to claim 13, characterized in that the subatmospheric pressure is between 0.6 bar and 0.8 bar, preferably 0.7 bar.

15. A process according to claim 13 or 14, characterized in that the emulsion is sprayed onto the rolls (1, 2, 3, 4) through the sucking air stream.

16. A process according to any of the preceding claims, characterized in that the emulsion is sprayed onto the rolls (1, 2, 3, 4) in a first region and is sucked off in a second region, which is separated from and succeeds the first region in the direction of rotation of the roll (1, 2, 3, 4) which is concerned.

17. A process according to claim 16, characterized in that the roll surface is wiped off between the first and second regions.

18. A process according to claim 16 or 17, characterized in that the rolls (1, 2, 3, 4) are dried in an air stream after the emulsion has been sprayed.

19. A process according to claim 16, 17 or 18, characterized in that the drying air stream flows at a high velocity in contact with the roll surface and the velocity reaches 1/3 of the velocity of sound in air.

20. A process according to any of the preceding claims, characterized in that the release lubricant which has been applied is continuously washed away from the rolls (1, 2, 3, 4).

21. A process according to claim 20, characterized in that the release lubricant is washed away by the spraying of the emulsion.

22. An apparatus for forming a film of a release lubricant on a roll (1, 2, 3, 4) of a roll stand for the manufacture of two- or multilayer strips of metal by cold roll-cladding, comprising
a supply tank containing the release lubricant in an emulsion,
a device (7) for applying the release lubricant, which device extends along the roll (1, 2, 3, 4) and is directed toward the roll, and
a device for feeding the release lubricant from the supply tank (11) to the applying device (7),
characterized by a sucking-off device (40, 25), which extends along the roll (1, 2, 3, 4) and is closely laterally spaced from it.

23. An apparatus according to claim 22, characterized in that the sucking device (40, 25) extends over the applying device (7).

24. An apparatus according to claim 22, characterized in that the sucking device (40, 25) is disposed between the applying device (7) and the nip in the direction of rotation of the roll (1, 2, 3, 4).

25. An apparatus according to claim 23 or 24, characterized in that the sucking device (40, 25) is constituted by a chamber (46, 47), which extends along the roll (1, 2, 3, 4) and which is open toward the surface of the roll and is so close to the roll (1, 2, 3, 4) that the chamber is covered by the roll surface and defines gaps (41, 42, 43, 44) therewith, and at least one suction opening (52) opens into the chamber and is connected to the suction side of a sucking unit (25).

26. An apparatus according to claims 23 and 25, characterized in that the applying device (7) is a spraying device, which is supplied by a pump (13) with an emulsion, which contains the release lubricant.

27. An apparatus according to claim 26, characterized in that the spraying device (7) comprises a number of nozzle orifices (53), which are arranged along and directed toward the surface of the roll (1, 2, 3, 4).

28. An apparatus according to claim 25, 26 or 27, characterized in that the chamber (46) which extends over the applying means (7) (and will subsequently be described as the "first" chamber) is succeeded in the direction of rotation of the roll (1, 2, 3, 4) by a second chamber (47), which extends along the roll (1, 2, 3, 4) and is also open toward the roll surface and so close to the roll (1, 2, 3, 4) that the roll surface covers the second chamber and defines gaps (41, 42, 43, 44) therewith, and at least one suction opening (52) also opens into the second chamber and is connected to the second side of a sucking unit (25).

29. An apparatus according to claim 28, characterized in that in the direction of rotation of the roll (1, 2, 3, 4) a wiper (45) is provided on the outgoing side of the first chamber (46) and extends along the roll (1, 2, 3, 4) and contacts the roll surface.

30. An apparatus according to claim 29, characterized in that the wiper (45) is a rubber-elastic lip (50).

31. An apparatus according to any of claims 28 to 30, characterized in that the two chambers (46, 47) closely succeed each other in the direction of rotation of the roll (1, 2, 3, 4).

32. An apparatus according to claims 29 and 31 or claims 30 and 31, characterized in that the wiper (45) separates the chambers (46, 47).

33. An apparatus according to any of claims 28 to 32, characterized in that the two chambers (46, 47) have a common suction opening (52).

34. An apparatus according to claim 25 or 28, characterized in that the gaps (41, 42, 43, 44) are narrower than 1 mm, preferably narrower than 0.5 mm.

35. An apparatus according to claims 25 and 34, characterized in that the gap on the entering side of the first chamber (46) is 0.3 mm to 0.4 mm wide.

36. An apparatus according to claims 28 and 34, characterized in that the gap (43) on the outgoing side of the second chamber (47) is 0.1 mm to 0.2 mm wide.

37. An apparatus according to claims 25 and 27 or claims 27 and 28, characterized in that the gaps (41, 42) which extend in the peripheral direction of the roll (1, 2, 3, 4) are increased in depth, particularly adjacent to the first chamber (46), by grooves (58) formed in the adjacent end wall (56) of the chamber (46, 47) and extending approximately in the longitudinal direction of the roll (1, 2, 3, 4).

38. An apparatus according to claim 26, characterized in that the pump (13) has a capacity of at least 0.5 liter/min per cm chamber length.

39. An apparatus according to any of claims 22 to 38, characterized in that the roll stand comprises hard chromium-plated work rolls (1, 2).

40. The use of the process according to any of claims 1 to 21 for roll-cladding a plurality of laterally spaced apart metal strips onto a backing strip.

41. A process according to claim 40, characterized in that aluminum strips are roll-clad onto a backing strip of iron-nickel, preferably of FeNi42.

## Revendications

1. Procédé pour la fabrication de feuillards bi- ou multi-couches en métal par plaquage sous laminage à froid, consistant à conduire les feuillards à réunir vers l'emprise formée entre deux cylindres de laminoir (1, 2) et à appliquer pendant ce temps sur ces deux cylindres (1, 2) un lubrifiant séparateur, caractérisé en ce que l'on applique sur lesdits cylindres (1, 2) une émulsion contenant le lubrifiant séparateur et une base émulsifiante dont la pression de vapeur est supérieure à celle du lubrifiant séparateur et qui ne constitue pas en elle-même un lubrifiant ou un séparateur pour le plaquage sous laminage à froid, et en ce que, en même temps, les cylindres (1, 2) sont soumis à une aspiration.

2. Procédé selon la revendication 1, caractérisé en ce que la base émulsifiante est de l'eau.

3. Procédé selon la revendication 1 ou 2, caractérisé en ce que l'émulsion contient un agent anti-mousse.

4. Procédé selon l'une des revendications précédentes, caractérisé en ce que la teneur en lubrifiant séparateur dans l'émulsion se situe entre 1 % en volume et 30 % en volume, de préférence à 10 % en volume.

5. Procédé selon l'une des revendications précédentes, caractérisé en ce que l'émulsion est vaporisée sur les cylindres (1, 2).

6. Procédé selon l'une des caractéristiques précédentes, caractérisé en ce que le lubrifiant séparateur contient de l'huile minérale.

7. Procédé selon la revendication 6, caractérisé en ce que le lubrifiant séparateur contient une ou plusieurs huiles grasses.

8. Procédé selon la revendication 6 ou 7, caractérisé en ce que le lubrifiant séparateur contient une combinaison sulfurée organique.

9. Procédé selon l'une des revendications précédentes, caractérisé en ce que la partie aspirée de l'émulsion est reconduite dans le circuit.

10. Procédé selon l'une des revendications précédentes, caractérisé en ce que l'émulsion est maintenue à une température constante.

11. Procédé selon l'une des revendications précédentes, en liaison avec une cage de laminoir qui contient deux cylindres actifs (1, 2) et au moins deux cylindres d'appui (3, 4) pour supporter les cylindres actifs (1, 2), caractérisé en ce que l'émulsion n'est pas vaporisée sur les deux cylindres actifs (1, 2) mais sur les deux cylindres d'appui (3, 4) de la cage de laminoir.

12. Procédé selon la revendication 11, caractérisé en ce que l'émulsion est vaporisée sur les cylindres actifs (1, 2) à proximité de l'emprise formée par lesdits cylindres (1, 2) et ceci du côté de la sortie de cette emprise.

13. Procédé selon l'une des revendications précédentes, caractérisé en se que l'émulsion est vaporisée sur les cylindres (1, 2, 3, 4) sous une atmosphère dont la pression est inférieure à la pression atmosphérique.

14. Procédé selon la revendication 13, caractérisé en ce que la pression inférieure à la pression atmosphérique se situe entre 0,6 bar et 0,8 bar, de préférence à 0,7 bar.

15. Procédé selon la revendication 13 ou 14, caractérisé en ce que l'émulsion est vaporisée sur les cylindres (1, 2, 3, 4) à travers le flux d'air d'aspiration.

16. Procédé selon l'une des revendications précédentes, caractérisé en ce que l'émulsion est vaporisée sur les cylindres (1, 2, 3, 4) dans une première zone et aspirée dans une deuxième zone séparée de la première et lui faisant suite dans le sens de rotation du cylindre considéré (1, 2, 3, 4).

17. Procédé selon la revendication 16, caractérisé en ce que, entre la première et la deuxième zones, la surface des cylindres est essuyée.

18. Procédé selon la revendication 16 ou 17, caractérisé en ce que les cylindres (1, 2, 3, 4) sont séchés dans un courant d'air après la vaporisation de l'émulsion.

19. Procédé selon les revendications 16, 17 ou 18, caractérisé en ce que le courant d'air de séchage balaie la surface des cylindres à une vitesse élevée, cette vitesse atteignant un tiers de la vitesse du son dans l'air.

20. Procédé selon l'une des revendications précédentes, caractérisé en ce que le lubrifiant séparateur appliqué est éliminé des cylindres (1, 2, 3, 4) par un lavage continu.

21. Procédé selon la revendication 20, caractérisé en ce que le lubrifiant séparateur est éliminé par lavage au moyen de la vaporisation de l'émulsion.

22. Procédé pour la production d'un film lubrifiant séparateur sur un cylindre (1, 2, 3, 4) d'une cage de laminoir pour la fabrication de feuillards bi- ou multicouches en métal par plaquage sous laminage à froid comportant un réservoir (11) contenant le lubrifiant séparateur sous forme d'une émulsion, un dispositif (7) s'étendant le long des cylindres (1, 2, 3, 4) et orienté contre ces cylindres (1, 2, 3, 4) pour l'application du lubrifiant séparateur, et un dispositif pour amener le lubrifiant séparateur du réservoir (11) vers le dispositif d'application (7), caractérisé par un dispositif d'aspiration (40, 25) s'étendant le long du cylindre (1, 2, 3, 4) et disposé immédiatement à côte de celui-ci.

23. Dispositif selon la revendication 22, caractérisé en ce que le dispositif d'aspiration (40, 25)est un chevauchement avec le dispositif d'application (7).

24. Dispositif selon la revendication 22, caractérisé en ce que le dispositif d'aspiration (40, 25) est disposé, par rapport au sens de rotation du cylindre (1, 2, 3, 4), entre le dispositif d'application (7) et l'emprise.

25. Dispositif selon la revendication 23 ou 24, caractérisé en Ce que le dispositif d'aspiration (40, 25) est formé par une chambre (46, 47) s'étendant le long du cylindre (1, 2, 3, 4), chambre qui est ouverte en direction de la surface du cylindre et est disposée tout contre le cylindre (1, 2, 3, 4) de manière si étroite qu'elle est recouverte par la surface du cylindre en formant des interstices (41, 42, 43, 44), et dans laquelle débouche au moins un orifice d'aspiration (52) qui est relié au côté aspiration d'un appareil aspirateur (25).

26. Dispositif selon les revendications 23 et 25, caractérisé en ce que le dispositif d'application (7) est un dispositif de vaporisation auquel est amené, au moyen d'une pompe (13), une émulsion contenant le lubrifiant séparateur.

27. Dispositif selon la revendication 26, caractérisé en ce que le dispositif vaporisateur (7) présente un certain nombre d'orifices en forme de buses (53) qui sont disposés le long du cylindre (1, 2, 3, 4) et orientés en direction de la surface de celui-ci.

28. Dispositif selon les revendications 25, 26 ou 27, caractérisé en ce que, à côté de la chambre (46) venant chevaucher le dispositif d'aspiration (7) (désigné ci-après la "première" chambre) est prévue une deuxième chambre (47) s'étendant le long du cylindre (1, 2, 3, 4) et disposée en aval de la première chambre (46) vue dans le sens de rotation du cylindre (1, 2, 3, 4), cette deuxième chambre étant également ouverte en direction de la surface du cylindre et donc disposée étroitement contre ledit cylindre (1, 2, 3, 4) de telle sorte qu'elle est recouverte par la surface du cylindre en formant des interstices (41, 42, 43, 44) et dans laquelle débouche également au moins un orifice d'aspiration qui est relié au côté aspirant d'un appareil aspirateur (25).

29. Dispositif selon la revendication 28, caractérisé en ce que, par rapport au sens de rotation du cylindre (1, 2, 3, 4), est disposé, sur le côté de la sortie de la première chambre (46), un essuie-cylindre (45) s'étendant le long du cylindre (1, 2, 3, 4) et s'appliquant contre la surface du cylindre.

30. Dispositif selon la revendication 29, caractérisé en ce que l'essuie-cylindre (45) est, ou possède, une lèvre (50) élastique comme du caoutchouc.

31. Dispositif selon l'une des revendications 28 à 30, caractérisé en ce que les deux chambres (46, 47) sont immédiatement adjacentes l'une par rapport à l'autre vues dans le sens de rotation du cylindre ((1, 2, 3, 4).

32. Dispositif selon les revendications 29 et 31 ou 30 et 31, caractérisé en ce que l'essuie-cylindre (45) sépare les deux chambres (46, 47).

33. Dispositif selon l'une des revendications 28 à 32, caractérisé en ce que les deux chambres (46, 47) ont un orifice d'aspiration (52) commun.

34. Dispositif selon la revendication 25 ou 28, caractérisé en ce que les interstices (41, 42, 43, 44) sont d'une largeur inférieure à 1 mm, de préférence inférieure à 0,5 mm.

35. Dispositif selon les revendications 25 et 34, caractérisé en ce que l'interstice (44) du côté de l'entrée de la première chambre (46) a une largeur comprise entre 0,3 et 0,4 mm.

36. Dispositif selon les revendications 28 et 34, caractérisé en ce que l'interstice (43) du côté de la sortie de la deuxième chambre (47) a une largeur comprise entre 0,1 et 0,2 mm.

37. Dispositif selon les revendications 25 et 27 ou 27 et 28, caractérisé en ce que les interstices (41, 42) s'étendant dans le sens périphérique du cylindre (1, 2, 3, 4), en particulier dans la zone de la première chambre (46), sont rendus plus profonds par des gorges (58) s'étendant sensiblement en direction longitudinale des cylindres (1, 2, 3, 4) pratiquées dans la paroi d'extrémité respective (56) de la chambre (46, 47).

38. Dispositif selon la revendication 26, caractérisé en ce que la pompe (13) a une puissance de refoulement d'au moins 0,5 l/mn pour chaque cm de longueur de la chambre.

39. Dispositif selon l'une des revendications 22 à 38, caractérisé en ce que la cage de laminoir présente des cylindres actifs (1, 2) chromés.

40. Mise en oeuvre du procédé selon l'une des revendications 1 à 21 pour le laminage sur un feuillard support de plusieurs feuillards métalliques placés côte-à-côte à une certaine distance.

41. Procédé selon la revendication 40, caractérisé en ce que des feuillards d'aluminium sont laminés sur un feuillard support en ferro-nickel, en particulier en FeNi42.
